Europäisches Patentamt

European Patent Office

Office européen des brevets

(11) Publication number: **0 187 715 B1**

# EUROPEAN PATENT SPECIFICATION

(45) Date of publication of patent specification: **11.09.91**　(51) Int. Cl.⁵: **C08F 6/22**

(21) Application number: **86300091.5**

(22) Date of filing: **08.01.86**

The file contains technical information submitted
after the application was filed and not included in
this specification

(54) **Process for coagulating polymer latices and polymeric articles prepared thereby.**

(30) Priority: **10.01.85 US 690227**

(43) Date of publication of application:
**16.07.86 Bulletin 86/29**

(45) Publication of the grant of the patent:
**11.09.91 Bulletin 91/37**

(84) Designated Contracting States:
**AT BE CH DE FR GB IT LI LU NL SE**

(56) References cited:
**US-A- 3 751 527**
**US-A- 4 103 074**

(73) Proprietor: **ROHM AND HAAS COMPANY**
**Independence Mall West**
**Philadelphia Pennsylvania 19105(US)**

(72) Inventor: **Hung, J-Ming**
**11 White Birch Lane**
**Holland, Pa. 18966(US)**

(74) Representative: **Angell, David Whilton et al**
**ROHM AND HAAS (UK) LTD. European Oper-**
**ations Patent Department Lennig House 2**
**Mason's Avenue**
**Croydon CR9 3NB(GB)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

## Description

This is concerned with coagulation of aqueous polymer latices.

Coagulation of a polymer latex is well known. For example, U.S. Patent No. 3,751,527 discloses blending two polymers, which may be the same or different, in an extruder, and teaches that a coagulant solution may be composed of any of a number of salts such as sodium chloride, and polyvalent metal salts such as calcium chloride, aluminum chloride or aluminum sulfate.

U.S. Patent No. 2,516,980 discloses incorporating, into a synthetic hydroxylated polymer, a minor amount by weight of a hypophosphorus acid compound to reduce discoloration of the hydroxylated polymer at elevated temperature. Among the compounds which are disclosed for incorporation into a solution of the hydroxylated polymer are sodium hypophosphite, and the ammonium, alkali metal and alkaline earth metal salts such as potassium, calcium, magnesium, barium and ammonium hypophosphites. This patent is directed to treating a polymer solution or a polymer fabric, yarn or film, and fails to teach the use of an alkaline earth metal salt, as contemplated herein, for coagulating a polymer latex.

U.S. Patent No. 2,548,974 is directed to a method of making rubbery articles which are deposited directly from an aqueous dispersion of rubber-like material. This patent discloses a method for making rubbery deposition articles which includes leaching coagulant from a rubbery coagulum deposit in a short time without introducing a large amount of water into the deposit. A coagulum deposit is exposed to water vapor and an aqueous coagulant-containing liquid accumulates between the article and a suitably shaped form. Coagulants which may be leached are water-soluble polyvalent metal salts of inorganic or organic acids such as calcium nitrate, or of water-soluble ionizable acids such as acetic acid. The patent fails to teach or suggest any of the coagulants used herein.

U.S. Patent No. 2,576,720 is directed to granular polymerization of a material such as methyl methacrylate, styrene or vinyl acetate, sodium or potassium hypophosphite being used as an anti-clustering agent. The patent defines "clustering", as the agglomeration of fine polymer granules to form aggregates of larger and widely varying sizes. The patent fails to teach or suggest the invention described herein.

U.S. Patent No. 3,896,093 is directed to a process for recovering polymers of acrylonitrile and styrene and, optionally, butadiene, by coagulation of aqueous latices containing these polymers. This patent teaches that coagulants such as hydrochloric acid, sulfuric acid, formic acid, and water-soluble chlorides, nitrates, sulfates and acetates of sodium, potassium, calcium, magnesium, zinc and aluminum may be used, but does not teach the use of non-nucleophilic, non-oxidative coagulants.

U.S. Patent No. 3,915,909 is directed to a process for isolating rubbers from aqueous dispersions (latices) thereof. The process involves adding an alkyl cellulose or a hydroxyalkyl cellulose to an aqueous rubber dispersion and adding a water-soluble alkali metal salt or alkaline earth metal salt, aluminum salt or zinc salt to the dispersion. None of the salts which are added are non-nucleophilic and non-oxidative.

U.S. Patent No. 3,160,620 is directed to the coagulation of chloroprene polymer latices and isolation of the polymer therefrom. The aqueous coagulating solution contains a water-soluble calcium salt, hydroxyethyl cellulose and a water-soluble salt of a water-insoluble carboxylic acid, all of these components being stated to be necessary to obtain the benefits of the invention. The patent discloses the use of coagulants such as a water-soluble calcium salt which may be the nitrate, chloride, bromide, thiocyanate, and acetate, but fails to teach or suggest a non-nucleophilic, non-oxidative coagulant or polymer obtained using such coagulant.

Known processes utilizing coagulants to coagulate a polymer from a polymer latex suffer from the disadvantage that the very nature of the coagulants serve to introduce additional precipitating additives into a material which already contains residues from emulsifier, polymerization initiator, and other components which, although necessary to the process, also serve to introduce contaminants into the final polymer and thus into articles prepared from the final polymer. These diluents or contaminants have an adverse effect on polymer properties and on articles made from the resultant polymer.

We have now found a process for the coagulation of polymer latex which enables the preparation of polymer, the properties of which are not substantially affected by residual coagulant, and also enables the production of clear, transparent, solid, polymeric articles which have a combination of enhanced properties of water haze value, yellowness index and light transmission.

According to the present invention there is provided a process, which comprises coagulating aqueous polymer latex by contacting aqueous polymer latex with an effective amount of an aqueous solution of water-soluble, non-nucleophilic, non-oxidative alkaline earth metal and/or zinc salt and, optionally, recovering the resulting coagulated polymer.

The invention also provides poly(methyl methacrylate) polymer or copolymer of methyl methacrylate, prepared by the aforesaid process in an extruder, and a clear, transparent, solid, polymeric article having a water haze value of less than 15 percent, a yellowness index of less than +4, and a percent light transmission of at least 88%.

We have surprisingly found that non-nucleophilic, non-oxidative alkaline earth metal and/or zinc salts are not only effective in coagulating a polymer latex but also result in a polymer product having a novel combination of color, water haze resistance, and percent light transmission properties.

As used herein in connection with the present invention:-

(i) the term "alkaline earth metal" means calcium, barium, strontium or magnesium,

(ii) the terms "acrylic polymer", "methacrylic polymer", "styrenic polymer" and "vinyl polymer" include copolymers usually of a major amount of the stated monomer with at least one other monomer e.g. copolymers of the stated monomer with at least one other monomer selected from acrylic, methacrylic, styrenic and vinyl monomers;

(iii) the term "acrylic polymer" includes polymers which are predominantly derived from a monomer which may be an ester of acrylic acid such as a butyl acrylate, ethyl acrylate, 2-ethylhexylacrylate or benzyl acrylate,

(iv) the term "methacrylic polymer" includes polymers prepared from a monomer which is predominantly an ester of methacrylic acid such as methyl methacrylate, isobornyl methacrylate or cyclohexyl methacrylate,

(v) the term "styrenic polymer" includes polymers derived predominantly from styrene, alpha-methylstyrene, para-methylstyrene or chlorostyrene,

(vi) the term "vinyl polymer" includes polymers predominantly derived from vinyl chloride, vinylidene chloride or vinyl acetate.

The process of this invention may be operated as either a batch process or a continuous process for coagulation, for example, as would be used with a devolatilizing extruder in which the coagulated polymer latex is advanced towards an exit by a rotating screw or pair(s) of screws. Regardless of whether a batch or continuous process is used, the process involves adding a coagulant solution to polymer latex thereby coagulating the polymer. Water and water-soluble impurities are conveniently removed from the coagulated medium and the polymer may thereafter be washed and dried.

The term "non-nucleophilic", as used herein in connection with the invention, means that the coagulant will not act to attack, in any manner so as to adversely affect, an electrophilic species. (See J. March, Advanced Organic Chemistry, second edition, McGraw-Hill, 1977, page 322, for a further description of nucleophilic attack.) Among the nucleophilic anions which should be avoided in practicing this invention may be mentioned those derived from chlorine, bromine, iodine, acetate and other carboxylates. Although salts of such nucleophilic anions are capable of coagulating a polymer latex, such nucleophilic salts are incapable of coagulating a polymer latex to yield a polymer having the unique properties which are exhibited by polymers prepared by the process of the present invention.

Suitable non-nucleophilic, non-oxidative anions which may be combined with an alkaline earth metal or zinc cation to form the salts useful in this invention include the hypophosphite, trifluoromethanesulfonate, trifluoroacetate, and methanesulfonate anions.

Suitable coagulants for use in this invention include, for example, divalent metal salts of hypophosphorus acid, e.g. calcium hypophosphite, zinc hypophosphite, magnesium hypophospite, barium hypophosphite and strontium hypophosphite, calcium methanesulfonate, zinc methanesulfonate, calcium trifluoroacetate and calcium trifluoromethanesulfonate.

The coagulant salt used in this invention must be water-soluble, i.e., must be at least 0.1% soluble in water by weight at 25° C. and atmospheric pressure. If the salt which is used does not have at least that minimum degree of solubility, then the salt will not be effective as a coagulant in this invention because it will not produce the desired result. It is preferred, for reasons of convenience and economics, to use an aqueous coagulant solution wherein the concentration of coagulant is from 0.1% to 10% by weight, based on the total weight of the coagulant solution.

Although the solution of coagulant has been referred to as an aqueous solution, the coagulant solvent may be composed wholly of water or may contain a cosolvent such as an alcohol, e.g., ethyl alcohol. Any other cosolvent may be used which will not adversely affect the desired degree of concentration of the coagulant in the solvent system and wherein the cosolvent does not have an adverse affect on either the operation of the coagulant or on the polymer or its properties. Thus, in addition to alcohol, one may use a cosolvent or mixture of cosolvents, such as acetone and/or tetrahydrofuran.

The amount of coagulant solution used to coagulate the polymer may vary widely and will depend upon the concentration of the coagulant in the solution, the composition of the polymer latex being coagulated, and the conditions, such as temperature, pressure and shear rate, under which the coagulation takes place.

The coagulant is used in an effective amount which generally will vary from 0.05% to 5% by weight, based on the weight of the polymer solids in the latex.

The amount of coagulant solution to be used with any particular polymer latex can readily be determined, for a given set of conditions under which the polymer latex is being processed and the coagulant is added, by titrating the coagulant solution into a known volume of a sample of the polymer latex until the desired degree of coagulation has been obtained, such as would be indicated by the disappearance of white water, which indicates that a sufficient amount of coagulant has been added. Normally, an excess of coagulant is used when coagulating a polymer latex.

A polymer latex comprising primarily methyl methacrylate polymer or butyl acrylate polymer, which contains 30% to 60% by weight solids and may contain a small amount of a comonomer such as ethyl acrylate, may, for example, be coagulated using from about 5 liters of a 0.3% by weight coagulant solution, such as calcium hypophosphite, for each 3 liters of polymer latex at conditions such as 85°C., at atmospheric pressure.

The pH of the coagulant solution is not critical and may vary widely. The only caveat is that the pH of the coagulant solution must be compatible with the pH of the polymer latex. Typically, a polymer latex would be at a pH of about 3 to about 7.5. If the coagulant solution has a pH which varies widely from the desired pH of the polymer latex, then the pH of the coagulant solution may be adjusted with an appropriate base or acid so that the desired pH of the polymer latex will not be adversely affected with the resultant disadvantage of obtaining less desirable properties such as color.

The polymer latex may be prepared by either batch or continuous methods and such methods are well known. One method for preparing the polymer latex comprises adding water and emulsifier to a reaction vessel and agitating vigorously the resulting water-emulsifier dispersion. Monomer(s) (depending on whether a homopolymer or copolymer is to be prepared) is then added and agitation is continued. Initiator is then added and polymerization subsequently begins, either with or without the application of heat. Polymerization is deemed completed when the desired amount of monomer has reacted.

Examples of emulsifier suitable for use in preparing the polymer latex include: alkali metal salts of aryl, alkyl or alkaryl sulfonic acids or sulfates, such as sodium and potassium dodecylbenzene-sulfonate, sodium lauryl sulfate and sodium laurylsulfonate; and alkali metal salts of dialkyl sulfosuccinates, such as sodium dioctyl sulfosuccinate and sodium oleate.

Initiators that may be used to prepare the polymer latex include, for example, sodium, potassium and ammonium salts of peracids, such as sodium persulfate, and redox-type initiators, such as sodium persulfate/sodium formaldehyde sulfoxylate, cumene hydroperoxide/sodium metabisulfite and potassium persulfate/sodium hyposulfite.

In choosing suitable initiators and emulsifiers factors such as the chemical composition of the polymer latex being prepared, emulsion stability, rate of polymerization, thermal stability of the resultant polymer in the latex, compatability of the coagulant salt with the initiator or initiator decomposition product are important. For example, one would not use sodium persulfate as initiator when the coagulant salt is barium hypophosphite because the initiator residue would react with the barium hypophosphite to convert it to barium sulfate which is not water-soluble and is not soluble in the polymer. Thus, the initiator used should not leave a residue which would react with the coagulant salt to render it water-or polymer-insoluble.

The emulsion system, from which the polymer latex is derived, may contain one or more other components, for example, molecular weight control agent, such as alkyl mercaptan, thermal stabilizer, anti-oxidant and/or ultra-violet stabilizer. Such other component(s), which may be added and the amounts thereof, will be apparent to one skilled in the art, and the invention is not to be construed as limited to any particular method of preparing a polymer latex or to any additional components which may be added to the system when preparing a polymer latex.

The process of this invention may be used to prepare, from a polymer latex, a wide variety or coagulated polymers having a unique combination of properties.

Examples of polymers (including copolymers) which may be used in the process of the present invention include acrylic, methacrylic, styrenic and vinyl polymers. Polymers of alkyl methacrylates having 1 to 22, preferably 1 to 4, carbon atoms in the alkyl portion, particularly methyl methacrylate; copolymers of alkyl methacrylates with styrenic monomers, vinyl monomers, acrylic monomers, methacrylic monomers and/or acrylonitrile, in which the alkyl methacrylate predominates on a weight basis; polymers of alkyl acrylates having 1 to 22, preferably 1 to 12, carbon atoms in the alkyl portion, such as n-butyl acrylate, ethyl acrylate or 2-ethylhexyl acrylate; copolymers of alkyl acrylates with styrenic monomers, vinyl monomers, methacrylic monomers, acrylonitrile and/or diene monomers such as butadiene, in which the alkyl acrylate predominates on a weight basis; polymers of styrenic monomers, such as polystyrene; copolymers of styrenic monomers with acrylic monomers, acrylonitrile and/or methacrylic monomers, in which the styrenic monomer predominates on a weight basis; terpolymers of styrenic monomer and dienic monomer with a third monomer, such as acrylonitrile-butadiene-styrene polymers, may be used.

Small amounts of functional monomers may be incorporated into the polymer latices used with the present invention; such monomers may include those with acid functionality, such as itaconic acid, acrylic acid and sodium styrene sulfonate; crosslinking monomers, such as alkylene diacrylates and divinylbenzene; monomers useful in chemical post-cures, such as chloroethyl acrylate and methylol methacrylamide; graft-linking monomers, such as allyl methacrylate and diallyl maleate.

The present invention is particularly useful when preparing a staged polymer. By the term "staged polymer" is meant a polymer which may have a core of, for example, butyl acrylate polymer, polybutadiene, methyl methacrylate polymer or various copolymers. A second stage may be composed of the same or dissimilar polymer(s) and there may be one or more subsequent stages. Any one or more of the stages may have a crosslinker or graftlinker or both present.

Such a staged polymer may be prepared by emulsion polymerising, in the presence of previously prepared polymer latex, a monomer or mixture of monomers to form a layer (stage) of the polymerized monomer or monomer mixture over the particles of the previously prepared polymer latex. This process may be carried out one or more times until the desired number of stages of the same or different polymer composition have been achieved.

Any of the additives normally present when preparing a polymer latex may also be present in any or all of the various stages. One may even prepare several stages where the polymers differ from one another only in molecular weight but are compositionally the same. This may, for example, be achieved by adding an alkyl mercaptan when polymerizing monomer(s) which is the same as the monomer(s) of a previously prepared stage which was not prepared using an alkyl mercaptan.

Impact modifiers for plastics materials may be prepared by the process of this invention. Such impact modifiers may include methacrylate-butadiene-styrene modifiers, acrylonitrile-butadiene-styrene modifiers, multistage acrylic-methacrylic modifiers, for example butyl acrylate polymer as a core material and methyl methacrylate polymer as a shell or intermediate stage. Other stages may also be present.

In a particularly preferred embodiment of this invention, the process may be practiced as is set forth in U.S. Patent No. 3,751,527 wherein an apparatus, such as a screw extruder, is used which has means, such as a rotating screw, for advancing a liquid-bearing or a liquid-containing polymerized material, such as a polymer latex, along a channel. Means is also provided for feeding the liquid-bearing or liquid-containing material into the channel and means is provided to heat the channel and its contents, if desired. Means is further povided for introducing a coagulant into the material as it is fed into the channel or in the vicinity of its entry into the channel. Dewatering means and liquid discharge means are provided along the channel. Also provided are devolatilization means and means to control the pressure exerted upon the coagulated polymer system as it proceeds through a zone of the channel which embraces the entry and discharge means.

Thus, in practicing the present invention in a manner as set forth in U.S. Patent No. 3,751,527, the liquid-containing polymer latex would be introduced into an extruder and a coagulant solution would be added to the latex in the extruder at a point at or near the point of entry of the latex. Thereafter, heat, sufficient to fuse the coagulated polymer, may be applied, depending upon the latex employed. The latex would be coagulated by the coagulant solution while being advanced through the extruder towards a dewatering zone, a devolatilization zone and then to an exit where it would be expelled. The pressure exerted upon the coagulated polymer system as it proceeds through the extruder is maintained in order to express the liquid from the coagulated latex, which liquid would also contain residues from initiator, emulsifier and other materials which may have been added when preparing the polymer latex.

In a particularly preferred embodiment, the extruder is equipped with at least one pair of screws. The number of pairs of screws present in the extruder is dictated solely by economic and practical process considerations.

In an even more preferred embodiment of this invention, each screw member of each pair of screws present in the extruder rotates in a direction counter to the rotational direction of the other screw member of the pair. In this manner, mixing and expulsion of water and water-soluble materials from the coagulated latex is enhanced.

It is particularly surprising that when a methyl methacrylate polymer latex is coagulated in an extruder, a clear, transparent, solid, polymeric article can be obtained which exhibits a unique combination of water haze value, yellowness index and percent light transmission properties. Such a unique combination of properties is also obtained with copolymers of methyl methacrylate with, for example, ethyl acrylate, butyl acrylate, styrene, alpha-methylstyrene and/or acrylonitrile.

It is preferred that, when the polymer latex is a methyl methacrylate copolymer, the methyl methacrylate be present in an amount of at least about 50% by weight based on the weight of the monomers charged.

Although the unique combination of properties are obtained with poly(methyl methacrylate) or a copolymer thereof when the process of this invention is practiced using an extruder as aforedescribed, other polymers or copolymers can also experience an alteration of a combination of their properties when the process of this invention is practiced in an extruder, for example the extruder described in U.S. Patent No. 3,751,527.

Particularly preferred is the use of the process of the invention to coagulate a polymer latex which is a blend of at least two polymer latices, preferably

(i) a blend of

(a) a polymer latex comprising methyl methacrylate polymer,

(b) a polymer latex of staged polymer having a stage comprising methyl methacrylate polymer, e.g. a copolymer of methyl methacrylate and ethyl acrylate, a subsequent stage comprising copolymer of butyl acrylate and styrene, and subsequently a stage comprising methyl methacrylate polymer, e.g. a copolymer of methyl methacrylate and ethyl acrylate, and

(c) a polymer latex of staged polymer having a stage comprising copolymer of methyl methacrylate and ethyl acrylate and a subsequent stage comprising methyl methacrylate polymer; or

(ii) a blend of

(a) a polymer latex comprising copolymer of methyl methacrylate and ethyl acrylate,

(b) a polymer latex of staged polymer having a stage comprising copolymer of methyl methacrylate and ethyl acrylate, a subsequent stage comprising copolymer of butyl acrylate and styrene, and subsequently a stage comprising copolymer of methyl methacrylate and ethyl acrylate, and

(c) a polymer latex of a staged polymer having a stage comprising a copolymer of methyl methacrylate and ethyl acrylate and a subsequent stage comprising methyl methacrylate polymer.

Although the above method is preferred, the process of this invention may be carried out in an extruder other than the extruder described above.

The present invention will now be further illustrated by way of the following Examples which are for illustrative purposes only and are not to be construed as imposing any limitation on the scope of the invention.

In the Examples, unless otherwise specified, all parts and percentages are parts and percentages by weight based on the amount of monomer(s) present except that the amount of coagulant salt used is based on the polymer solids present in the latex.

The yellowness index was determined according to the test set forth in ASTM D1925. Initial haze and water haze were determined according to the test method described in ASTM D1003. Percent light transmission was determined by ASTM Test Method D1746.

The various polymer latices, used in the Examples, were prepared by standard means, known to one skilled in the art and the invention is not to be construed as limited to any method of preparing a polymer latex.

EXAMPLE 1

A latex emulsion containing a copolymer of 96 parts methyl methacrylate and 4 parts of ethyl acrylate was prepared using 0.35 part of potassium dodecyl benzene sulfonate, 0.06 part of potassium persulfate, 0.48 part of tertiary-dodecylmercaptan and 100 parts of water. The reaction was conducted under nitrogen at 85° C for a period of 120 minutes. The resultant polymer latex contained 50%, by weight, of solids.

40 parts of the latex prepared as described above were introduced into the coagulation zone of an extruder having a coagulation zone, a dewatering zone and a devolatilization zone. The extruder has two counter-rotating 2.03 cm (0.8 inch) diameter screws disposed tangential to one another through its center and through the coagulation zone, dewatering zone and the devolatilization zone. The coagulation zone temperature was 50° C to 170° C and was heated by injecting high pressure steam into the polymer latex. The dewatering zone and the devolatilization zone were heated by a combination of shear and supplying external heat to the screw barrel walls. A 2% aqueous solution of calcium hypophosphite (0.1% by weight of a coagulant salt based on weight of polymer solids) and 14 parts of steam were injected into the coagulation zone. Coagulation commenced immediately and the coagulated polymer, with the volatiles, water and various water solutions present were passed into the dewatering zone which was at a temperature of 180° C. to 200° C.. The back pressure in the dewatering zone was 1.034 M Pa gauge (150 psig). The water expressed from the coagulated latex was then expelled through an outlet in the dewatering zone. The polymer was then passed to the devolatilization zone which reached a temperature of 270° C. In the devolatilization zone, volatile materials were expelled through an outlet. The polymer then proceeded along the extruder to an exit and was expelled as a strand, cooled and cut into pellets.

The resulting polymer pellets were dried at 60°C for 12 hours and then injection molded into 5.08 cm (2 inch) by 7.62 cm (3 inch) by 0.32 cm (1/8 inch) thick clear transparent plaques. The yellowness index, initial haze, percent light transmission, and water haze (24 hours at 70°C.) of the plaques were then determined and the results were as follows:

```
Yellowness index =                          +2.7
Initial Haze =                               3.1
Water Haze (24 hrs. at 70°C) =               3.3
Percent Light Transmission Through
           Sample =                          89.8%
```

COMPARATIVE EXAMPLE A

The procedure of Example 1 was repeated except that dipotassium hydrogen phosphate was used as coagulant.

The results are as follows:

TABLE I

| Coagulant | Amount of Coagulant Salt (% based on Amt. of Polymer Solids) | Yellowness Index | Initial Haze | Water Haze (24 hrs at 70°C) | Percent Light Transmission Through Sample |
|---|---|---|---|---|---|
| Dipotassium Hydrogen Phosphate | 2.6 | +3.2 | 6.7 | 100 | 86.9 |

As is shown by the above Comparative Example A and Example 1, the process according to this invention results in a superior polymeric article.

EXAMPLE 2

A series of polymer latices were prepared in the manner of Example 1. Different emulsifiers were used for each preparation and the amount of emulsifier used was 0.35%. The emulsifiers used were as follows:

## TABLE II

| Example | Emulsifier Used |
|---------|-----------------|
| 2a | disodium dodecyldiphenylether disulfonate |
| 2b | potassium dodecylbenzenesulfonate |
| 2c | sodium dioctylsulfosuccinate |

3 liters of polymer latex was added to a 10 liters stainless steel beaker in which there was present 5 liters of water at 85°C, and 0.33 part of the coagulant of Example 1. The beaker was equipped with an air driven stirrer. The mixture was then stirred for ten minutes and filtered. A portion of the resultant, wet cake was washed three times with 85°C deionized water and then dried under vacuum at 60°C. The washed samples were then molded into plaques, as described in Example 1, and the yellowness index, initial haze, water haze (24 hours at 70° C.) and percent light transmission were determined. Table III sets forth the results.

## TABLE III

| Example | Yellowness Index | Initial Haze | Water Haze (24 hrs at 70°C) | Percent Light Transmission Through Sample |
|---------|------------------|--------------|------------------------------|--------------------------------------------|
| 2a | +2.6 | 5.6 | 6.4 | 92.4 |
| 2b | +1.3 | 3.6 | 4.2 | 93.2 |
| 2c | +3.2 | 5.5 | 5.7 | 91.5 |

## EXAMPLE 3

110 parts of a latex, prepared as in Example 1 and containing 50% solids, was mixed with 82.4 parts of a latex of a multistage polymer containing 51% solids (latex A), and 6.4 parts of another latex of a staged polymer (latex B).

Latex A =

first stage prepared from

33.5 parts methyl methacrylate

1.4 parts ethyl acrylate

0.07 part allyl methacrylate

85.3 parts water

in the presence of

0.135 part potassium dodecylbenzenesulfonate

0.021 part potassium persulfate

- second stage prepared from

36.3 parts butyl acrylate

7.9 parts styrene

0.9 part allyl methacrylate

6.4 parts water

in the presence of

0.044 part potassium persulfate

0.176 part potassium dodecylbenzenesulfonate

- third stage prepared from

19.2 parts methyl methacrylate

0.8 part ethyl acrylate

6.3 parts water

in the presence of

0.0120 part potassium persulfate

Each stage is polymerized, in the manner of Example 1, in the presence of the polymerized preceding stage or stages.

Latex B =

first stage prepared from

10.0 parts ethyl acrylate

15.0 parts methyl methacrylate

112.8 parts water

in the presence of

0.40 part sodium lauryl sulfate

0.012 part potassium persulfate

0.01 part sodium hyposulfite

- second stage prepared from

75.0 parts methyl methacrylate

0.010 part potassium persulfate

Each stage is prepared in the manner of Example 1, and the second stage is polymerized in the presence of the first stage.

The latices were blended with one another and the blend was divided into 4 portions, each portion being coagulated with a different coagulant, according to the process of Example 1. The resulting polymers were formed into plaques in the manner of Example 1 and the properties of the plaques were determined. The coagulants used and the results obtained were as follows:

## TABLE IV

| Coagulant | Amount of Coagulant Salt (% based on Amt. of Polymer Solids) | Yellowness Index | Initial Haze | Water Haze (24 hrs at 70°C) | Percent Light Transmission Through Sample |
|---|---|---|---|---|---|
| Calcium Hypophosphite | 0.10 | +3.1 | 4.9 | 6.8 | 90.3 |
| Magnesium Hypophosphite | 0.10 | +3.3 | 4.1 | 12.2 | 89.9 |
| Calcium * Acetate | 0.16 | +6.2 | 4.0 | 6.1 | 88.4 |
| Dipotassium * Hydrogen Phosphate | 2.8 | +3.2 | 3.8 | 92.4 | 91.0 |

*Comparative

EXAMPLE 4

250 parts of a polymer latex, prepared in the manner of Example 1 from 74 parts of methyl methacrylate, 24 parts of alpha-methylstyrene, 2 parts of ethyl acrylate, 150 parts water, 0.3 part n-dodecyl mercaptan, 0.39 part sodium dodecylbenzenesulfonate and 0.13 part sodium persulfate, was coagulated in accordance with the procedure of Example 1 using the coagulant of Example 1. The resultant polymer was then molded into plaques as in Example 1. The yellowness index, initial haze, water haze and percent light transmission were then determined and the results obtained were as follows:

TABLE IV

| Coagulant | Amount of Coagulant Salt (% based on Amt. of Polymer Solids) | Yellowness Index | Initial Haze | Water Haze (24 hrs at 70°C) | Percent Light Transmission Through Sample |
|---|---|---|---|---|---|
| Calcium Hypophosphite | 0.38 | +1.3 | 1.1 | 1.1 | 92.9 |

EXAMPLE 5

The procedure of Example 3 was repeated except that the blended latices were divided into 6 portions. Each portion was coagulated with a different coagulant salt and molded into plaques as in Example 1. The results obtained were as follows:

EP 0 187 715 B1

## TABLE V

| Coagulant | Amount of Coagulant Salt (% based on Amt. of Polymer Solids) | Yellowness Index | Initial Haze | Water Haze (24 hrs at 70°C) | Percent Light Transmission Through Sample |
|---|---|---|---|---|---|
| Calcium acetate (comparative) | 0.16 | +8.8 | 12.9 | 14.1 | 89.6 |
| Calcium hypophosphite | 0.16 | +3.3 | 5.1 | 6.2 | 90.8 |
| Calcium trifluoroacetate | 0.16 | +2.6 | 4.0 | 5.5 | 92.3 |
| Calcium methanesulfonate | 0.16 | +3.0 | 4.2 | 6.8 | 92.1 |
| Calcium trifluoromethane-sulfonate | 0.15 | +3.2 | 4.9 | 6.0 | 91.6 |
| Zinc hypophosphite | 0.19 | +2.6 | 5.0 | 6.9 | 91.9 |

## Claims

1. A process, which comprises coagulating aqueous polymer latex by contacting the aqueous polymer latex with an effective amount of an aqueous solution of water soluble, non-nucleophilic, non-oxidative alkaline earth metal and/or zinc salt, and optionally recovering the resulting coagulated polymer.

2. A process as claimed in claim 1, wherein said effective amount is from 0.05% to 5% by weight of said salt, based on the weight of latex polymer solids.

3. A process as claimed in claim 1 or 2, wherein said salt is present in said aqueous solution in a concentration of from 0.1% to 10% by weight, based on the total weight of the coagulant solution.

4. A process as claimed in any of claims 1 to 3, wherein said polymer latex comprises one or more of acrylic polymer, methacrylic polymer, styrenic polymer, and vinyl polymer.

5. A process as claimed in any of claims 1 to 4, wherein said polymer comprises copolymer.

6. A process as claimed in any of claims 1 to 5, wherein said salt comprises hypophosphorus acid salt, preferably calcium hypophosphite, zinc hypophosphite, and/or magnesium hypophosphite.

7. A process as claimed in any of claims 1 to 5, wherein said salt comprises calcium methanesulfonate.

8. A process as claimed in any of claims 1 to 7, wherein said aqueous polymer latex is prepared by forming a first polymer latex from at least one monomer, and then polymerizing additional monomer in

11

the presence of saìd first polymer latex.

9. A process as claimed in any of claims 1 to 8, wherein said aqueous polymer latex is conveyed into an extruder having a screw and said aqueous solution of said salt is added to said latex in said extruder and the screw of said extruder advances said coagulated polymer towards an exit from said extruder.

10. A process as claimed in claim 9, wherein said screw of said extruder is rotating when said polymer latex is conveyed into contact with said screw and when said aqueous solution of said salt is added, and said screw advances said coagulated polymer towards an exit from said extruder.

11. A process as claimed in claim 10, wherein said extruder contains at least one pair of screws, each member of said pair rotating in a direction counter to the rotational direction of the other member.

12. A process as claimed in any of claims 1 to 11, wherein said polymer latex is a blend of at least two polymer latices, preferably:
    (i) a blend of
       (a) a polymer latex comprising methyl methacrylate polymer,
       (b) a polymer latex of staged polymer having a stage comprising methyl methacrylate polymer, e.g. a copolymer of methyl methacrylate and ethyl acrylate, a subsequent stage comprising copolymer of butyl acrylate and styrene, and subsequently a stage comprising methyl methacrylate polymer, e.g. a copolymer of methyl methacrylate and ethyl acrylate, and
       (c) a polymer latex of staged polymer having a stage comprising copolymer of methyl methacrylate and ethyl acrylate and a subsequent stage comprising methyl methacrylate polymer; or
    (ii) a blend of
       (a) a polymer latex comprising copolymer of methyl methacrylate and ethyl acrylate,
       (b) a polymer latex of staged polymer having a stage comprising copolymer of methyl methacrylate and ethyl acrylate, a subsequent stage comprising copolymer of butyl acrylate and styrene, and subsequently a stage comprising copolymer of methyl methacrylate and ethyl acrylate, and
       (c) a polymer latex of a staged polymer having a stage comprising a copolymer of methyl methacrylate and ethyl acrylate and a subsequent stage comprising methyl methacrylate polymer.

13. A process as claimed in claim 9 as applied to the production of clear, transparent, solid polymer comprising poly(methyl methacrylate), or methyl methacrylate copolymer, having a water haze value of up to 15 percent, a yellowness index of up to +4 and a percent light transmission of at least 88 percent.

**Revendications**

1. Procédé qui comprend la coagulation d'un latex polymère aqueux, par mise en contact du latex polymère aqueux avec une quantité efficace d'une solution aqueuse d'un sel de métal alcalino-terreux et/ou de zinc, soluble dans l'eau, non nucléophile, non oxydant, et éventuellement la récupération du polymère coagulé obtenu.

2. Procédé selon la revendication 1, dans lequel ladite quantité efficace est de 0,05 à 5 % en poids dudit sel par rapport au poids de l'extrait sec polymère du latex.

3. Procédé selon la revendication 1 ou 2, dans lequel ledit sel est présent dans ladite solution aqueuse à une concentration de 0,1 à 10 % en poids par rapport au poids total de la solution de coagulant.

4. Procédé selon l'une quelconque des revendications 1 à 3, dans lequel ledit latex polymère comprend un ou plusieurs polymères acryliques, méthacryliques, styréniques et vinyliques.

5. Procédé selon l'une quelconque des revendications 1 à 4, dans lequel ledit polymère inclue un copolymère.

**6.** Procédé selon l'une quelconque des revendications 1 à 5, dans lequel ledit sel inclut un sel de l'acide hypophosphoreux, de préférence l'hypophosphite de calcium, l'hypophosphite de zinc et/ou l'hypophosphite de magnésium.

**7.** Procédé selon l'une quelconque des revendications 1 à 5, dans lequel ledit sel inclut le méthanesulfonate de calcium.

**8.** Procédé selon l'une quelconque des revendications 1 à 7, dans lequel on prépare ledit latex polymère aqueux en formant un premier latex polymère à partir d'au moins un monomère, puis en polymérisant un monomère supplémentaire en présence dudit premier latex polymère.

**9.** Procédé selon l'une quelconque des revendications 1 à 8, dans lequel ledit latex polymère aqueux est envoyé dans une extrudeuse comportant une vis, ladite solution aqueuse dudit sel étant ajoutée audit latex dans ladite extrudeuse, la vis de ladite extrudeuse faisant avancer ledit polymère coagulé vers une sortie de ladite extrudeuse.

**10.** Procédé selon la revendication 9, dans lequel ladite vis de ladite extrudeuse est en rotation quand ledit latex polymère est envoyé pour être mis en contact avec ladite vis et quand ladite solution aqueuse dudit sel est ajoutée, ladite vis faisant avancer ledit polymère coagulé vers une sortie de ladite extrudeuse.

**11.** Procédé selon la revendication 10, dans lequel ladite extrudeuse contient au moins une paire de vis, chaque élément de cette paire tournant dans une direction inverse du sens de rotation de l'autre élément.

**12.** Procédé selon l'une quelconque des revendications 1 à 11, dans lequel ledit latex polymère est un mélange d'au moins deux latex polymères, de préférence :
  (i) un mélange
    (a) d'un latex polymère comprenant un polymère de méthacrylate de méthyle,
    (b) d'un latex polymère constitué d'un polymère à échelons, comportant un échelon comprenant un polymère de méthacrylate de méthyle, par exemple un copolymère de méthacrylate de méthyle et d'acrylate d'éthyle, un autre échelon comprenant un copolymère d'acrylate de butyle et de styrène, et enfin un échelon comprenant un polymère de méthacrylate de méthyle, par exemple un copolymère de méthacrylate de méthyle et d'acrylate d'éthyle, et
    (c) d'unlatex polymère, en un polymère à échelons comportant un échelon comprenant un copolymère de méthacrylate de méthyle et d'acrylate d'éthyle, et un autre échelon comprenant un polymère de méthacrylate de méthyle ; ou
  (ii) un mélange
    (a) d'un latex polymère comprenant un copolymère de méthacrylate de méthyle et d'acrylate d'éthyle,
    (b) d'un latex polymère constitué d'un polymère à échelons ayant un échelon comprenant un copolymère de méthacrylate de méthyle et d'acrylate d'éthyle, puis un échelon comprenant un copolymère d'acrylate de butyle et de styrène, et enfin un échelon comprenant un copolymère de méthacrylate de méthyle et d'acrylate d'éthyle, et
    (c) d'un latex polymère, en un polymère à échelons comportant un échelon comprenant un copolymère de méthacrylate de méthyle et d'acrylate d'éthyle, et un autre échelon comprenant un polymère de méthacrylate de méthyle.

**13.** Procédé selon la revendication 9, tel qu'appliqué à la production d'un polymère solide, transparent, clair, comprenant du poly(méthacrylate de méthyle) ou un copolymère de méthacrylate de méthyle, ayant un indice de trouble à l'eau jusqu'à 15 %, un indice de jaunissement jusqu'à +4 et un facteur de transmission lumineuse d'au moins 88 %.

**Patentansprüche**

**1.** Verfahren, bei dem wässriger Polymer-Latex koaguliert wird, indem der wässrige Polymer-Latex mit einer wirksamen Menge einer wässrigen Lösung eines wasserlöslichen, nicht-nucleophilen, nicht-oxidierenden Erdalkalimetallsalzes und/oder Zinksalzes in Kontakt gebracht wird, und gegebenenfalls das erhaltene koagulierte Polymer gesammelt wird.

2. Verfahren nach Anspruch 1, bei dem die wirksame Menge des Salzes 0,05 bis 5 Gew.-% bezogen auf das Gewicht der Latex-Polymer-Festkörper beträgt.

3. Verfahren nach Anspruch 1 oder 2, bei dem das Salz in der wässrigen Lösung in einer Konzentration von 0,1 bis 10 Gew.-% bezogen auf das Gesamtgewicht der Koagulationslösung vorliegt.

4. Verfahren nach einem der Ansprüche 1 bis 3, bei dem der Polymer-Latex ein oder mehrere von Acryl-Polymer, Methacryl-Polymer, Styrol-Polymer und Vinyl-Polymer umfasst.

5. Verfahren nach einem der Ansprüche 1 bis 4, bei dem das Polymer ein Copolymer umfasst.

6. Verfahren nach einem der Ansprüche 1 bis 5, bei dem das Salz ein Salz unterphosphoriger Säure, vorzugsweise Calciumhypophosphit, Zinkhypophosphit und/oder Magnesiumhypophosphit umfasst.

7. Verfahren nach einem der Ansprüche 1 bis 5, bei dem das Salz Calciummethansulfonat umfasst.

8. Verfahren nach einem der Ansprüche 1 bis 7, bei dem der wässrige Polymer-Latex hergestellt wird, indem ein erster Polymer-Latex aus mindestens einem Monomer gebildet und dann ein weiteres Monomer in Gegenwart des ersten Polymer-Latex polymerisiert wird.

9. Verfahren nach einem der Ansprüche 1 bis 8, bei dem der wässrige Polymer-Latex in einen eine Schraube aufweisenden Extruder geleitet und die wässrige Lösung des Salzes dem Latex im Extruder zugegeben wird und die Schraube des Extruders das koagulierte Polymer auf einen Ausgang des Extruders zutreibt.

10. Verfahren nach Anspruch 9, bei dem die Schraube des Extruders sich dreht, wenn der Polymer-Latex mit der Schraube in Kontakt gebracht und wenn die wässrige Lösung des Salzes zugegeben wird, und die Schraube das koagulierte Polymer auf einen Ausgang des Extruders zutreibt.

11. Verfahren nach Anspruch 10, bei dem der Extruder mindestens ein Schraubenpaar enthält, wobei sich die eine Schraube des Paares in eine Richtung dreht, die der Drehrichtung der andereren Schraube entgegengesetzt ist.

12. Verfahren nach einem der Ansprüche 1 bis 11, bei dem der Polymer-Latex eine Mischung von mindestens zwei Polymer-Latices, vorzugsweise
   (I) eine Mischung von
      (a) einem ein Methylmethacrylat-Polymer umfassenden Polymer-Latex,
      (b) einem Polymer-Latex eines Stufen-Polymers mit einer Stufe, die ein Methylmethacrylat-Polymer, beispielsweise ein Copolymer von Methylmethacrylat und Ethylacrylat, umfasst, einer Folgestufe, die ein Copolymer von Butylacrylat und Styrol umfasst, und schließlich einer Stufe, die ein Methylmethacrylat-Polymer, beispielsweise ein Copolymer von Methylmethacrylat und Ethylacrylat umfasst, und
      (c) einem Polymer-Latex eines Stufen-Polymers mit einer Stufe, die ein Copolymer von Methylmethacrylat und Ethylacrylat und einer Folgestufe, die ein Methylmethacrylat-Polymer umfasst, oder
   (II) eine Mischung von
      (a) einem Polymer-Latex, der ein Copolymer von Methylmethacrylat und Ethylacrylat umfasst,
      (b) einem Polymer-Latex eines Stufen-Polymers mit einer Stufe, die ein Copolymer von Methylmethacrylat und Ethylacrylat umfasst, einer Folgestufe, die ein Copolymer von Butylacrylat und Styrol umfasst, und schließlich einer Stufe, die ein Copolymer von Methylmethacrylat und Ethylacrylat umfasst, und
      (c) einem Polymer-Latex eines Stufen-Polymers mit einer Stufe, die ein Copolymer von Methylmethacrylat und Ethylacrylat umfasst, und einer Folgestufe, die ein Methylmethacrylat-Polymer umfasst, ist.

13. Verfahren nach Anspruch 9, betreffend die Herstellung eines klaren, transparenten festen ein Poly-

(methylmethacrylat) oder ein Methylmethacrylat-Copolymer umfassendes Polymer mit einem Wasser-Trübungswert von bis zu 15%, einem Gelbheits-Index von bis zu +4 und einer prozentualen Lichtdurchlässigkeit von mindestens 88%.